# EUROPEAN PATENT APPLICATION

(11) **EP 4 420 910 A1**
(43) Date of publication of application: **28.08.2024**
(21) Application number: 24157781.6
(22) Date of filing: 15.02.2024
(51) Int. Cl.: B60K 11/04, B33Y 80/00, F28F 7/02, B62D 21/17

(54) **FRONT FRAME ASSEMBLY EQUIPPED WITH AN INTEGRATED RADIATOR AND MOTOR VEHICLE COMPRISING THE SAME**

(30) Priority: 16.02.2023 IT 202300002643
(71) Applicant: FERRARI S.p.A., 41100 Modena (IT)
(72) Inventor: MERULLA, Andrea, 41100 MODENA (IT)
(74) Representative: Studio Torta S.p.A.

(57) **Abstract**

A front frame assembly (10; 10') for a motor vehicle (1; 1') comprising a transversal element (11; 11') extending crosswise to a longitudinal extension direction (X) of the motor vehicle (1; 1') and a heat exchange device (12; 12') integrated in or fixed to said transversal element (11; 11').

## Description

### CROSS-REFERENCE TO RELATED APPLICATIONS

This patent application claims priority from Italian patent application no. 102023000002643 filed on February 16, 2023, the entire disclosure of which is incorporated herein by reference.

### TECHNICAL FIELD

The invention relates to a front frame assembly for a motor vehicle. The invention further relates to a motor vehicle comprising a front frame assembly.

### BACKGROUND

Motor vehicles are known, which comprise heat exchange devices adapted to ensure the exchange of heat energy between two fluids or between a fluid and a portion of the motor vehicles. Said heat exchange devices can be used for several purposes, for instance for cooling the batteries or the engine of the motor vehicles.

The weight of said devices and of the other components of the vehicle that help carry out the heat exchange significantly affects the overall weight of the motor vehicles and, therefore, at least indirectly increases the quantity of polluting substances released by the motor vehicles.

Owing to the above, known motor vehicles need to be improved in order to obtain a reduction in terms of weight.

Therefore, the object of the invention is to fulfil the need discussed above, preferably in a simple and reliable fashion.

### DESCRIPTION OF THE INVENTION

Said object is reached by a front frame assembly for a motor vehicle as defined in claim 1. The dependent claims define special embodiments of the invention.

### BRIEF DESCRIPTION OF THE DRAWINGS

Hereinafter, two embodiments of the invention will be described, in order to allow the latter to be better understood, by way of non-limiting examples and with reference to the accompanying drawings, wherein:
- Figure 1 è a perspective view of a portion of a motor vehicle according to a first embodiment of the invention and with parts removed for greater clarity;
- Figure 2 is a cross-sectional view along line II-II of Figure 1 and with parts removed for greater clarity;
- Figure 3 is a perspective view of a front frame assembly of the motor vehicle of Figures 1 and 2;
- Figure 4 is a perspective view of a portion of a motor vehicle according to a second embodiment of the present invention and with parts removed for greater clarity;
- Figure 5 is a lateral view of the portion shown in Figure 4; and
- Figure 6 is a perspective and detail view of the portion shown in Figures 4 and 5.

### EMBODIMENTS OF THE INVENTION

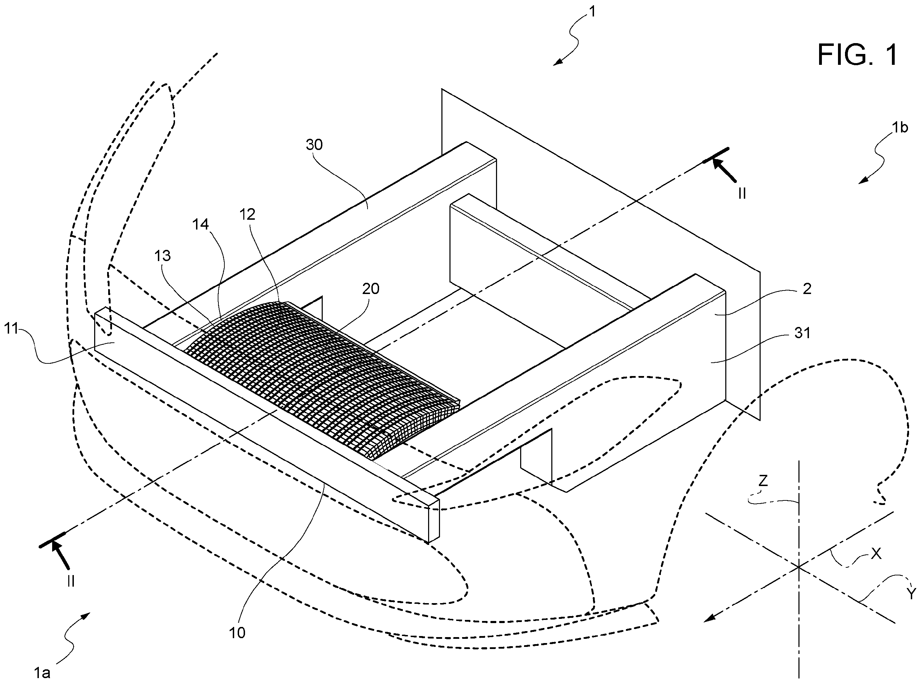

In figure 1, reference number 1 is used to indicate, as a whole, a motor vehicle comprising:
- a frame 2;
- a plurality of wheels 3, which can rotate around respective rotational axes relative to the frame 2 and are adapted to move the frame 2 relative to the ground S on which they rest; and
- driving means - not shown - adapted to drive the wheels 3 in rotation around the respective rotational axes.

The vehicle 1 comprises a front portion 1a and a rear portion 1b opposite one another along a longitudinal direction X of the vehicle. Specifically, considering a normal travel direction of the vehicle 1 (see the arrow of Figure 1 corresponding to the direction X), said travel direction is oriented from the rear portion 1b to the front portion 1a.

The frame 2 comprises, in turn, a front frame assembly 10, which is arranged at the front portion 1a (Figure 1).

The frame assembly 10 advantageously comprises a transversal element 11 extending crosswise to the direction X and a heat exchange device 12 integrated in the transversal element 11 or fixed to the transversal element 11.

The fact that the heat exchange device 12 is integrated in the transversal element 11 specifically means that at least some components of the heat exchange device 12 are shared by the transversal element 11. The fact that the heat exchange device 12 is fixed to the transversal element 11 means that the heat exchange device 12 and the transversal element 11 are two distinct bodies connected to one another in a releasable manner (for example, by means of threaded connection means) or in a permanent manner (for example, through welding).

The vehicle 1 further comprises a component to be cooled (for example, the driving means) and a cooling circuit - not shown - which extends between the component to be cooled and the heat exchange device 12 and where a first fluid flows.

As shown in Figure 1, the frame 2 comprises two longitudinal members 30, 31 extending parallel to one another and to the direction X and spaced apart from one another along a direction Y orthogonal to the direction X. It is further possible to define a direction Z vertical to the ground S and orthogonal to the directions X and Y.

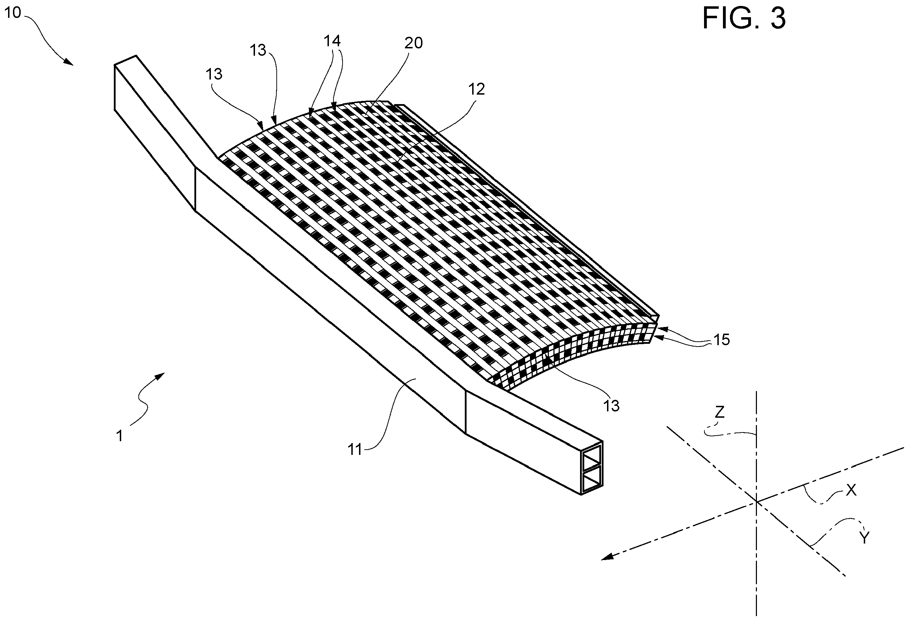

According to the embodiment shown in Figure 1, the transversal element 11 has a straight development in a plane going through the directions X and Y and is oriented parallel to the direction Y. Alternatively, the transversal element 11 has the development of a broken line in the plane going through the directions X and Y (Figure 3).

Furthermore, the transversal element 11 is fixed to the longitudinal members 30, 31 at respective ends of the longitudinal members 30, 31 along the direction X arranged on the side opposite the portion 1a. The transversal element 11 preferably projects relative to the longitudinal member 30 along the direction Y on the side opposite the longitudinal member 31 and relative to the longitudinal member 31 along the direction Y on the side opposite the longitudinal member 30 (Figure 1).

The heat exchange device 12 is a radiator comprising a plurality of ducts 13, where the first fluid flows and which are adapted to be lapped, on the outside, by a second fluid. In particular, the ducts 13 are part of the cooling circuit of the vehicle 1. For example, the first fluid is water or a water solution; the second fluid is air.

In detail, the heat exchange device 12 comprises a lattice structure 20 comprising repeated structural elements (for example, truss elements) defining the ducts 13 and the interstices 14 between the ducts 13. A flow of the second fluid is adapted to flow through the interstices 14. Specifically, the flow of the second fluid is due to the relative motion between the vehicle 1 and the air where said vehicle is immersed and/or to the kinetic energy provided by the air of a fan - not shown - of the vehicle 1.

The lattice structure 20 could further comprise one or more surfaces with fins.

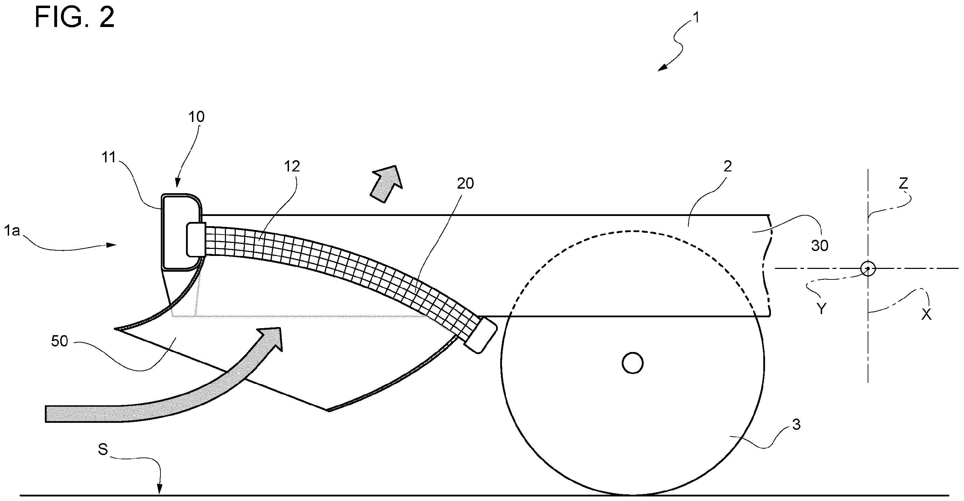

The front frame assembly 10 further comprises a duct 50 adapted to guide air towards the heat exchange device 12. In detail, the duct 50 comprises a first opening facing the front portion 1a and a second opening opposite the first opening and facing the heat exchange device 12 (Figure 2). In detail, the first opening is arranged under the transversal element 11 along the direction Z. The duct 50 is preferably fixed to the heat exchange device 12.

The heat exchange device 12, as a whole, is preferably manufactured by means of additive manufacturing, for example by means of selective laser melting of metal powders. Alternatively, the sole lattice structure 20 is manufactured by means of additive manufacturing.

In the embodiment shown herein, the ducts 13 comprise heat exchange surfaces for the exchange of heat between the first fluid and the second fluid, which have a flat shape. The lattice structure 12 specifically comprises a plurality of layers 15 of ducts 13 on top of one another parallel to the direction Z. Each layer 15 comprises a plurality of ducts 13 extending along the direction Y and arranged parallel to one another. The ducts 13 of each layer are spaced apart from one another along the direction X, defining the interstices 14. In addition, the ducts 13 have a rectangular cross section in a plane going through the directions X and Z (Figure 3).

According to an alternative embodiment which is not shown herein, the ducts 13 comprise heat exchange surfaces with the shape of gyroids.

Furthermore, the lattice structure 20 is preferably made of an aluminium alloy.

As shown in Figure 1, the heat exchange device 12 substantially has the shape of a parallelepiped and extends starting from the transversal element 11 towards the rear portion 1b. In detail, the heat exchange device 12 extends along the direction X over part of the extension of the longitudinal members 30, 31 along the direction X.

The heat exchange device 12 has a curved profile in a plane going through the directions X and Z. Said curved profile preferably has a concavity facing downwards, namely towards the ground S on which the wheels 3 rest (Figure 2).

In addition, the heat exchange device 12 projects past the transversal element 11 along the direction Z on the side of the transversal element 11 facing the ground S. In detail, the extension of the heat exchange device 12 along the direction Z is greater than the extension of the transversal element 11 along the direction Z (Figure 2).

The heat exchange device 12 is preferably arranged in a symmetrical manner along the direction Y relative to the transversal element 11. Furthermore, the extension of the heat exchange device 12 along the direction Y is smaller than the extension of the transversal element 11 along the direction Y. In detail, the heat exchange device 12 is interposed between the longitudinal members 30 and 31 along the direction Y (Figure 1).

In the specific case shown herein, the transversal element 11 is hollow and has a rectangular or substantially rectangular cross section in a plane going through the directions X and Z (Figure 2). The heat exchange device 12 is fixed to the transversal element 11 at a wall of the transversal element 11 facing the rear portion 1b.

During the operation, the first fluid flows inside the cooling circuit, cyclically removing heat from the component of the vehicle 1 to be cooled and subsequently flowing through the heat exchange device 12.

At the same time, the heat exchange device 12, which is supported by the transversal element 11, is hit by a flow of the second fluid. In detail, the second fluid reaches the heat exchange device 12 flowing through the duct 50, namely on the side of the heat exchange device 12 facing the ground S, flowing under the transversal element 11 and flowing out on the side of the heat exchange device 12 opposite the ground S.

While flowing through the heat exchange device 12, the first fluid flows through the ducts 13, exchanging heat with the second fluid flowing through the interstices 14.

After having released heat at the heat exchange device 12, the first fluid flows inside the cooling circuit towards the component to be cooled.

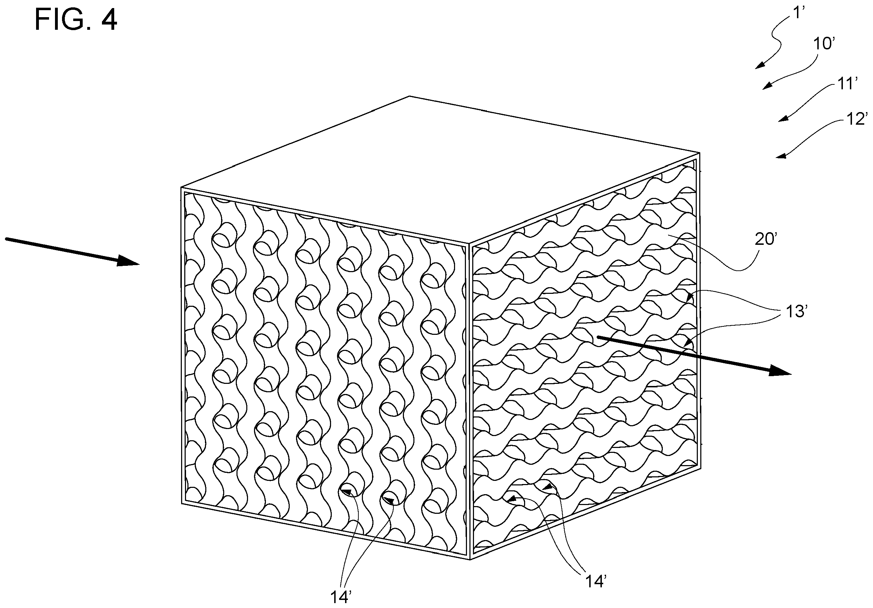

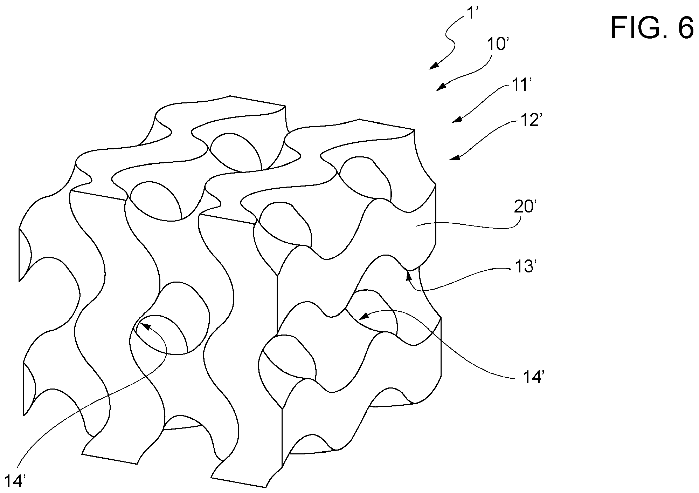

With reference to Figures 4, 5 and 6, 1' denotes a motor vehicle according to a second embodiment of the present invention. Motor vehicle 1' is similar to motor vehicle 1 and will be described in the following_only insofar as it differs from the latter; equal or equivalent parts of motor vehicles 1; 1' will be marked, where possible, by the same reference numerals.

Motor vehicle 1' differs from motor vehicle 1 in that it comprises a front frame assembly 10' instead of front frame assembly 10. Front frame assembly 10' is similar to front frame assembly 10 and will be described in the following only insofar as it differs from the latter; equal or equivalent parts of front frame assemblies 10; 10' will be marked, where possible, by the same reference numerals.

Front frame assembly 10' differs from front frame assembly 10 in that it comprises a lattice structure 20' instead of lattice structure 20. Lattice structure 20' comprises gyroid shaped surfaces defining the ducts 13' and the interstices 14' between the ducts 13'.

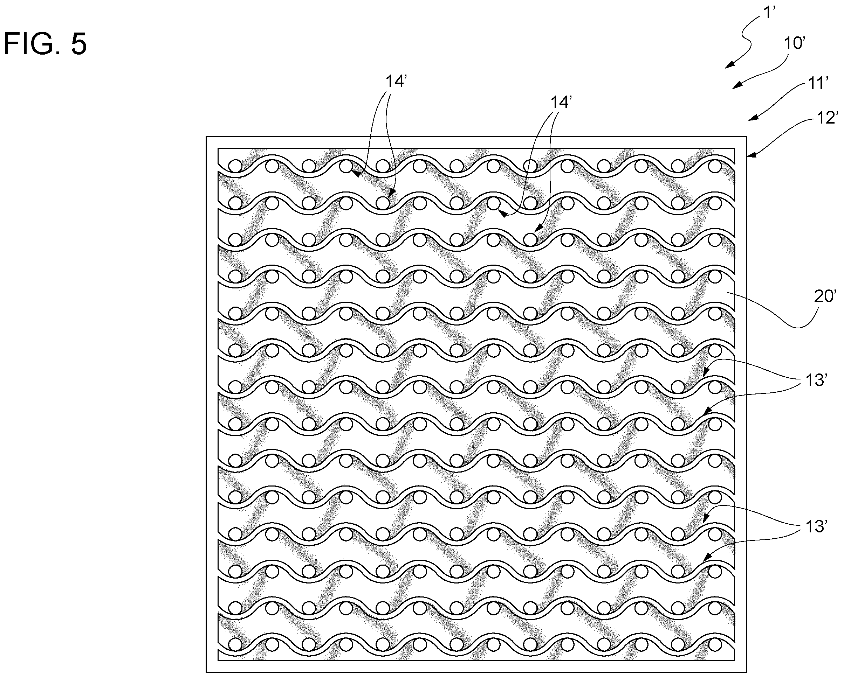

Preferably, interstices 14' are also configured as ducts. In addition, as show in Figure 5, each duct 13' is crossed by a plurality of interstices 14'. More specifically, interstices 14' are arranged transversally to ducts 13'.

Owing to the above, the advantages of the front frame assembly 10; 10' and of the motor vehicle 1; 1' according to the invention are evident.

Since the front frame assembly 10; 10' comprises the transversal element 11 and the heat exchange device 12; 12', which is integrated in the transversal element 11; 11' or fixed to the transversal element 11; 11', the weight of the vehicle 1; 1' is smaller compared to known vehicles discussed in the introductory part of the description. As a matter of fact, since the heat exchange device 12; 12' benefits from the structural features of the transversal element 11; 11', the heat exchange device 12; 12' itself can be manufactured with less noble structural features compared to known heat exchange devices and/or does not require the use of stiffening elements.

Since the ducts 13; 13' are defined by surfaces having a flat shape or a gyroid-like shape, the exchange of heat between the first fluid and the second fluid can be optimized.

In addition, the curved profile of the heat exchange device 12; 12' maximizes the flow of the second fluid reaching the heat exchange device 12; 12'.

Finally, the front frame assembly 10; 10' and the motor vehicle 1; 1' according to the invention can be subjected to changes and variants, which, though, do not go beyond the scope of protection set forth in the appended claims.

In particular, the number and the shape of the components described and shown herein could be different and, in particular, could be changed with a great degree of freedom.

The vehicle 1; 1' could comprise more than one front frame assembly 10; 10'. Furthermore, each front frame assembly 10; 10' could comprise more than one heat exchange device 12; 12'.

According to a not-shown embodiment, frame assembly 10; 10' might be arranged at rear portion 1b and thus be a rear frame assembly.

## Claims

1. Front frame assembly (10; 10') for a motor vehicle (1; 1'); said motor vehicle (1; 1') defining a longitudinal extension direction (X);
said front frame assembly (10; 10') comprising:
- a transversal element (11; 11') extending transversally to said longitudinal extension direction (X);
- a heat exchange device (12; 12') integrated into or fixed to said transversal element (11; 11').

2. Front frame assembly according to claim 1, wherein said heat exchange device (12; 12') is a radiator comprising a plurality of ducts (13; 13');
said ducts (13; 13') being adapted to be crossed, in use, on their inside by a first fluid and to be impinged on their outside by a second fluid.

3. Front frame assembly according to claim 2, wherein said heat exchange device (12; 12') comprises a lattice structure (20; 20') comprising said ducts (13; 13') and defining a plurality of interstices (14; 14') between said ducts (13; 13') adapted to be crossed, in use, by a flow of said second fluid.

4. Front frame assembly according to claim 3, wherein said heat exchange device (11; 11') is manufactured by additive manufacturing or said lattice structure (20; 20') is manufactured by additive manufacturing.

5. Front frame assembly according to any one of claims 2 to 4, wherein said ducts (13) comprise a thermal exchange surface between said first fluid and said second fluid; said thermal exchange surface being flat.

6. Front frame assembly according to any one of claims 2 to 4, wherein said ducts (13; 13') comprise a thermal exchange surface between said first fluid and said second fluid; said thermal exchange surface being gyroid shaped.

7. Motor vehicle (1; 1') comprising:
- a frame (2);
- a plurality of wheels (3) rotatable about respective rotational axes for moving said frame (2) relative to the ground (S);
- a front portion (1a) and a rear portion (1b) relative to a longitudinal extension direction (X) of said motor vehicle (1; 1');
said frame (2) comprising a front frame assembly (10; 10') according to any one of the foregoing claims and arranged at said front portion (1a).

8. Motor vehicle according to claim 7, wherein said heat exchange device (12; 12') extends from said transversal element (11; 11') towards said rear portion (1b) along said longitudinal extension direction (X).

9. Motor vehicle according to claim 7 or 8, wherein said heat exchange device (12; 12') has a curved profile in a plane passing through said longitudinal extension direction (X).

10. Motor vehicle according to claim 9, wherein said curved profile of said heat exchange device (12; 12') has concavity facing towards the ground (S) on which said wheels (3), in use, rest.

11. Motor vehicle according to any one of claims 7 to 10, wherein said heat exchange device (12; 12') protrudes beyond said transversal element (11; 11') along a second direction (Z), vertical in use, on the side of said transversal element (11; 11') facing towards ground (S) on which said wheels (3), in use, rest; said second direction (Z) being orthogonal to said longitudinal extension direction (X).
